(19) **Europäisches Patentamt / European Patent Office / Office européen des brevets**

(11) **EP 1 954 933 B1**

(12) **FASCICULE DE BREVET EUROPEEN**

(45) Date de publication et mention
de la délivrance du brevet:
**11.07.2012  Bulletin 2012/28**

(21) Numéro de dépôt: **06842075.1**

(22) Date de dépôt: **30.11.2006**

(51) Int Cl.:
**F02D 41/00** *(2006.01)*        **F02D 41/14** *(2006.01)*
**F02M 25/07** *(2006.01)*

(86) Numéro de dépôt international:
**PCT/FR2006/051264**

(87) Numéro de publication internationale:
**WO 2007/063258 (07.06.2007 Gazette 2007/23)**

(54) **PROCEDE ADAPTATIF DE COMMANDE D'UN MOTEUR**

ADAPTIVES VERFAHREN ZUR STEUERUNG EINES MOTORS

ADAPTIVE METHOD FOR CONTROLLING A MOTOR

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **02.12.2005  FR 0512242**

(43) Date de publication de la demande:
**13.08.2008  Bulletin 2008/33**

(73) Titulaire: **Renault s.a.s.**
**92100 Boulogne Billancourt (FR)**

(72) Inventeurs:
• **BUIS, Emmanuel**
  **F-92330 Sceaux (FR)**
• **TRICAUD, Christophe**
  **F-91850 Bouray sur Juine (FR)**

(56) Documents cités:
**EP-A- 1 239 142        EP-A- 1 505 282
EP-A- 1 571 322        US-A1- 2003 188 727
US-A1- 2005 198 945**

## Description

L'invention se rapporte au domaine de la commande d'un moteur.

En particulier, l'invention se rapporte à un procédé est un système de commande d'un moteur comprenant une étape de régulation d'au moins une grandeur du moteur autour d'une consigne et à l'aide d'un actuateur.

Des procédés de ce type sont déjà connus.

Le document EP1571372 divulgue un procédé de commande d'un moteur, dans lequel on régule une première grandeur autour d'une première consigne au moyen d'un actuateur, et on régule une deuxième grandeur autour d'une deuxième consigne au moyen d'un deuxième actuateur.

A titre d'exemple, on connaît un moteur mettant en oeuvre un procédé de commande dans lequel on régule une pression de suralimentation au moyen d'un turbo compresseur, un débit d'air au moyen d'un volet d'admission d'air, est un taux de recirculation d'un gaz d'échappement au moyen d'une vanne, ci-après désignée par vanne EGR (EGR est l'acronyme de l'expression anglo-saxonne « Exhaust Gaz Recirculation »).

Concernant la régulation de la pression de suralimentation, on sait que l'on peut utiliser par exemple une régulation en cascade,

Une telle régulation comporte classiquement une première boucle de régulation permettant par exemple de déterminer un taux de détente dans la turbine du turbocompresseur adapté pour faire converger la pression de suralimentation vers sa consigne associée.

La régulation comporte également une deuxième boucle permettant, dans cet exemple, de commander des ailettes de la turbine de manière à régler le taux de détente à ladite valeur déterminée.

Concernant la régulation du débit d'air et du taux de recirculation du gaz, on sait notamment qu'il peut être intéressant d'utiliser la consigne du débit d'air ($Q_{air\text{-}cons}$) et du taux de recirculation ($\tau_{EGR\_cons}$) pour créer deux autres consignes améliorées prenant en compte des phénomènes physiques dans le circuit d'admission et de recirculation du gaz, respectivement.

On peut ainsi créer deux consignes améliorées $Q_{air\_dyn\_cons}$ et $\tau_{EGR\_dyn\_cons}$ en utitisant les deux formules suivantes :

$$\dot{Q}_{air\_dyn\_cons} = 3600 \cdot \frac{V_{col}}{K_r} \cdot \frac{dQ_{air}}{dt} + Q_{air\_cons}$$

$$Q_{air\_dyn\_cons} = 3600 \cdot \frac{V_{col}}{K_r} \cdot \frac{dQ_{air}}{dt} + Q_{air\_cons}$$

$$Q_{EGR\_dyn\_cons} = 3600 \cdot \frac{V_{col}}{K_r} \cdot \frac{d\tau_{EGR\_cons}}{dt} \cdot \frac{Q_{air\_cons}}{(1 - \tau_{EGR\_cons})^2} + \frac{\tau_{EGR\_cons}}{1 - \tau_{EGR\_cons}} \cdot Q_{air\_dyn\_cons}$$

Avec $V_{col}$ et $K_r$, une vitesse de gaz dans le collecteur et un rendement volumétrique, respectivement.

On notera dans ce cas, qu'il est avantageux de créer une consigne de pression collecteur $P_{col\_cons}$ ayant par exemple l'expression ci-dessous.

$$P_{col\_cons} = \frac{R}{K_r} \cdot \left[ \left( \frac{\tau_{EGR\_cons}}{1 - \tau_{EGR\_cons}} \cdot Q_{air\_cons} \right) \cdot T_{EGR} + Q_{air\_cons} \cdot T_{air} \right]$$

avec, R, $T_{EGR}$ et $T_{air}$, une constante de gaz, une température du gaz recirculé et une température de l'air, respectivement.

Cette pression peut alors être utilisée, entre autres, pour construire une consigne de section efficace pour le volet et pour la vanne, définie par exemple par :

$$S_{eff\_volet\_cons} = Q_{air\_dyn\_cons} \frac{\sqrt{RT_{sural}}}{36.P_{sural}.BSV\left(\frac{P_{sural}}{P_{col\_cons}}\right)}$$

et,

$$S_{eff\_vanne\_cons} = Q_{EGR\_dyn\_cons} \frac{\sqrt{RT_{EGR}}}{36.P_{avt}.BSV\left(\frac{P_{avt}}{P_{col\_cons}}\right)}$$

avec en particulier, $T_{sural}$, BSV, $P_{sural}$ et $P_{avt}$, une température de suralimentation, la formule du Barré-Saint-Venant, une pression de suralimentation et une pression avant turbine, respectivement.

Dans le procédé de régulation, on peut ensuite faire en sorte que ces consignes de section efficaces permettent d'assurer les consignes améliorées du débit d'air et du taux de recirculation précitées.

Toutefois, un inconvénient des procèdes de régulation de ce type est qu'ils perdent en efficacité si l'un des actuateurs est saturé, ce qui arrive fréquemment pendant les périodes de fonctionnement normales du moteur,

En considérant par exemple que le volet d'admission d'air 3 est saturé lorsqu'il est en position complètement ouverte, la régulation du débit d'air ne peut plus être assurée correctement en cas de saturation, car le volet 3 a des difficultés à suivre la consigne de section,

Un tel phénomène génère inéluctablement un biais sur le débit d'air et plus généralement sur l'ensemble des grandeurs régulées, comme la pression de suralimentation, le taux de recirculation du gaz, ce qui constitue un inconvénient.

Un but de l'invention est de pallier au moins à cet inconvénient.

En particulier, un but de l'invention est de pouvoir mettre en oeuvre un procédé de régulation efficace, en dépit d'un actuateur inutilisable parce que saturé.

A cet effet, on propose un procédé de commande d'un moteur, caractérisé en ce qu'on régule une première grandeur autour d'une première consigne au moyen d'un premier actuateur, et on régule une deuxième grandeur autour d'une deuxième consigne au moyen d'un deuxième actuateur, les première et deuxième grandeurs, les premier et deuxième actuateurs et les première et deuxième consignes correspondant respectivement à un débit d'admission d'air dans le moteur, un taux de recirculation d'un gaz d'échappement, un volet d'admission d'air, une vanne de recirculation du gaz d'échappement, et une consigne de débit d'air et de débit du gaz d'échappement recirculé, et en ce qu'il comporte les étapes suivantes :

- on détermine si le premier actuateur est dans un état de fonctionnement qui permet de réguler la première grandeur selon un critère d'efficacité prédéterminé, et
- lorsque ce critère n'est pas respecté, on régule la première grandeur au moyen du deuxième actuateur en adaptant automatiquement la deuxième consigne de sorte qu'elle dépende de la première grandeur,
- on adapte la consigne de débit d'air et/ou du taux de recirculation du gaz d'échappement pour qu'elle dépende d'une pression sélectionnée dans le groupe suivant : une pression mesurée de suralimentation, une consigne de pression de suralimentation, une pression mesurée dans un collecteur,
- l'on régule la pression de suralimentation du moteur autour de la consigne de pression de suralimentation au moyen d'un turbocompresseur et au moyen d'une mesure de pression sélectionnée de la manière suivante :

  ➢ si le critère est respecté, la pression mesurée de suralimentation,
  ➢ si le critère n'est pas respecté, la pression mesurée dans le collecteur du moteur ;

- on élabore des consignes de débit d'air et de taux de recirculation du gaz d'échappement améliorées, par rapport auxdites consignes du débit d'air et du taux de recirculation du gaz d'échappement, en prenant en compte un volume du collecteur ; la consigne adaptée du débit d'air correspondant à une expression du type :

$$Q_{air\_cons} = \min\left( Q_{air\_carto}, K_r \frac{P_{1\_adapt}}{R.T_{col}} \right)$$

Et, comme nous le verrons plus loin, il peut être effectué de manière transparente pour le conducteur, notamment par mise en place d'une transition légère entre le premier mode de fonctionnement où les deux actuateurs ne sont pas saturés et le deuxième mode de fonctionnement où l'un d'entre eux l'est.

Des aspects préférés, mais non limitatifs de ce procédé sont les suivants :

- la deuxième consigne adaptée dépend de la première consigne ;
- on régule en outre une pression de suralimentation du moteur autour d'une consigne de pression de suralimentation au moyen d'un turbocompresseur et au moyen d'une mesure de pression sélectionnée de la manière suivante :
- on sélectionne dans le groupe la consigne de pression de suralimentation si l'on régule le débit d'air en boucle fermée et on sélectionne l'une parmi la pression de suralimentation mesurée et la pression mesurée dans le collecteur si l'on régule le débit d'air en boucle ouverte ;
- la consigne adaptée du taux de recirculation du gaz correspond à une expression du type :

$$\tau_{EGR\_cons} = \frac{Q_{EGR\_cons}}{Q_{EGR\_cons} + Q_{air\_cons}}$$

avec,

$$Q_{EGR\_cons} = \min\left( , Q_{EGR\_carto}, K_r \frac{P_{1\_adapt}}{R.T_{col}} - Q_{air\_cons} \right)$$

où min désigne une fonction de type mimimum et $Q_{EGR\_carto}$, $K_r$, $R$, $T_{col}$ et $Q_{air\_cons}$, désignent une valeur déterminée à partir d'une cartographie du débit de recirculation du gaz, un rendement volumétrique, une constante de gaz, une température dans le collecteur, et la consigne de débit d'air, respectivement ;

On propose en outre un moteur apte à mettre en oeuvre le procédé selon l'invention.

D'autres aspects, buts et avantages de l'invention apparaîtront mieux à la lecture de la description suivante de l'invention, faite en référence aux dessins annexés sur lesquels:

- la figure 1 montre un moteur mettant en oeuvre un mode de réalisation préféré du procédé de l'invention.
- la figure 2 est un schéma d'une structure de régulation d'une pression de suralimentation du moteur utilisée dans le procédé de l'invention,

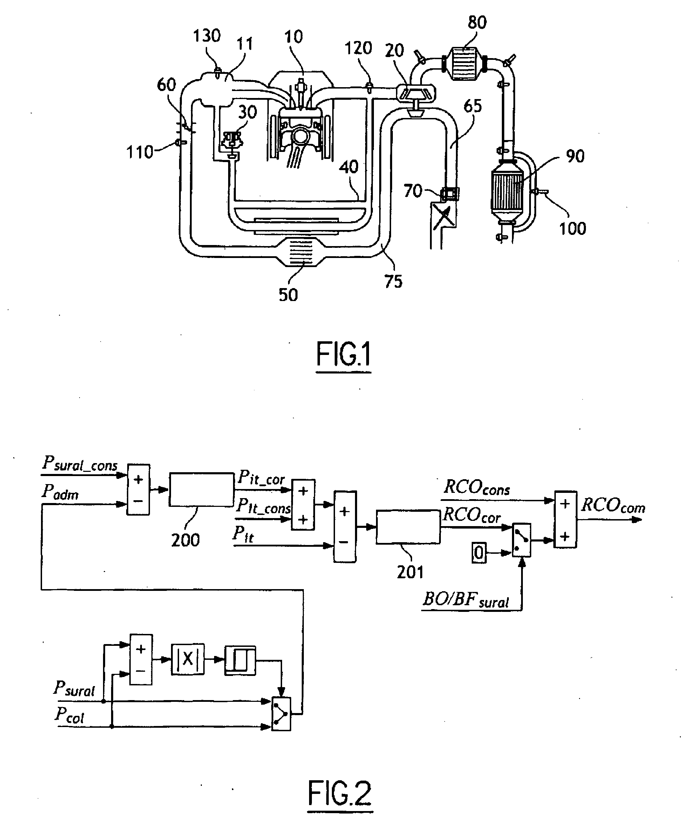

- la figure 2 est un schéma d'une structure de régulation d'une pression de suralimentation du moteur utilisée dans le procédé de l'invention,

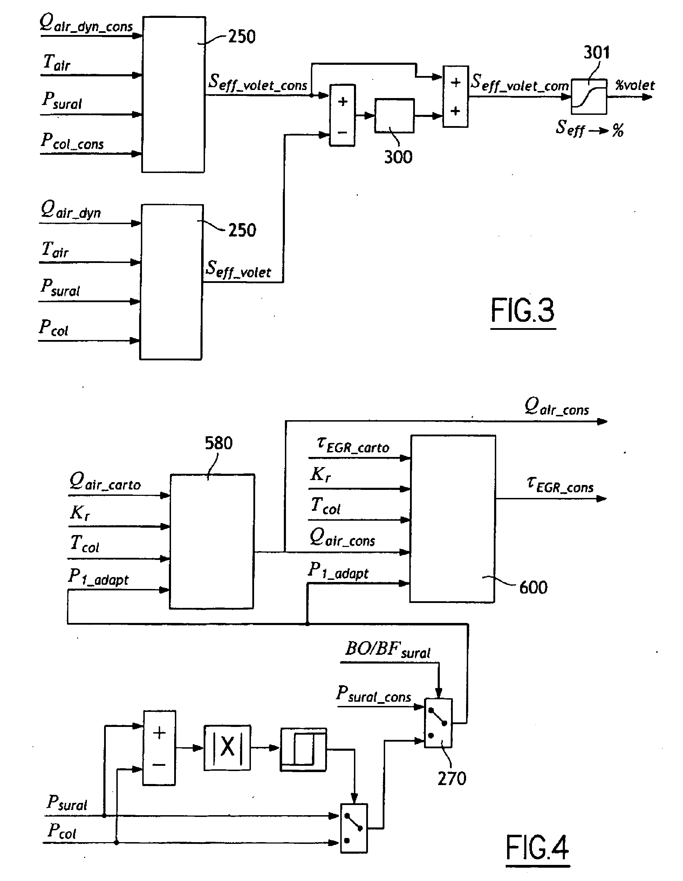

- la figure 3 est un schéma d'une structure de régulation d'un volet d'admission du moteur utilisée dans le procédé de l'invention,
- la figure 4 est un schéma montrant l'adaptation selon l'invention d'une consigne de débit d'air et d'une consigne de taux de recirculation du gaz d'échappement selon l'invention,

En se référant maintenant à la figure 1, on a représenté un moteur apte à mettre en oeuvre un mode de réalisation préféré de l'invention.

Ce moteur comporte un bloc moteur 10 ayant une entrée, au moins, en communication avec un collecteur d'admission 11 dans lequel passe un gaz.

Le moteur comporte en outre un circuit 40 de recirculation d'un gaz d'échappement issu du bloc moteur 10.

Ce circuit comporte une vanne EGR (référence 30) permettant de réguler le débit du gaz recirculé avant qu'il ne soit injecté dans le collecteur 11.

Le moteur comprend également un turbocompresseur 20 permettant de mettre en oeuvre une suralimentation en air du bloc moteur 10.

A cet effet, le turbocompresseur comporte classiquement une turbine qui entraîne le compresseur sous l'effet notamment des gaz d'échappement issus du bloc 10.

De façon connue en soi, le compresseur compresse l'air provenant d'un circuit d'admission d'air 65 et cet air comprimé est acheminé au travers d'une conduite 75 vers le collecteur.

On notera que la régulation du débit d'air fourni au compresseur est assurée notamment par un débitmètre d'air installé en amont du compresseur.

La conduite 75 comporte un échangeur d'air 50 ainsi qu'un volet d'admission 60 qui permettent de régler le débit d'air comprimé censé entrer dans le collecteur d'admission 11.

Tel qu'illustré encore à la figure 1, le moteur 1 comporte une ligne d'échappement comprenant un piège à oxydes d'azote 80 relié à une sortie de la turbine du turbocompresseur 20, et un filtre à particules 90 disposé en aval du piège précité.

De manière à optimiser le fonctionnement de ce filtre 90, un capteur de pression différentielle 100 peut être agencé entre deux de ses bornes.

Bien entendu le moteur peut comporter d'autres composants que l'homme du métier utilisera en fonction des besoins.

En particulier, le moteur peut comporter des capteurs de pression, tels que le capteur 110 de pression de suralimentation agencé vers l'entrée du volet d'admission 60, le capteur 120 pour mesurer la pression de gaz présents en entrée de la turbine, ou encore le capteur 130 de pression dans le collecteur 11.

En tous les cas, l'homme du métier adaptera ce moteur sans difficulté pour qu'il soit à même de mettre en oeuvre le procédé de l'invention.

Comme évoqué précédemment, ce procédé comporte une étape de régulation de différentes grandeurs du moteur.

Dans le mode de réalisation préféré, on régule notamment le débit d'air au moyen du volet 60, le taux de recirculation du gaz d'échappement au moyen de la vanne EGR 30, et la pression de suralimentation au moyen du turbocompresseur 20.

Par ailleurs, dans ce mode de réalisation non limitatif, on fait en sorte que la régulation du débit d'air soit efficace même si le volet d'admission 60 est saturé.

On considèrera qu'une telle saturation a lieu lorsque le volet est ouvert complètement.

Bien entendu, une ouverture moins importante pourrait être choisie (par exemple 90% d'ouverture).

Ce choix est effectué en déterminant un état dans lequel le volet 60 n'est plus apte à réguler efficacement le débit d'air selon la consigne imposée.

Comme nous allons le voir, selon ce procédé, la régulation du débit d'air est continue entre deux états de fonctionnement du moteur consistant respectivement à un respect ou un non respect du critère d'efficacité.

On notera que ce critère traduit dans une certaine mesure la capacité du volet 60 à fonctionner efficacement ou pas.

En d'autres termes, il permet une décision quant à déterminer si ce volet est, ou n'est pas, saturé.

L'efficacité de la régulation du débit d'air est rendue possible dans les deux états de fonctionnement par une adaptation notamment de la consigne du taux de recirculation $\tau_{EGR\_cons}$.

En particulier, cette consigne peut prendre des valeurs classiques dans l'état de fonctionnement non saturé, et des valeurs qui dépendent du débit d'air en cas inverse.

De cette manière, on régule le débit d'air à l'aide notamment de la consigne $\tau_{EGR\_cons}$.

Par ailleurs, la régulation est rendue continue entre les deux états de fonctionnement en faisant en sorte que la consigne notamment du taux de recirculation $\tau_{EGR\_cons}$ corresponde à une expression mathématique elle-même continue.

Nous allons maintenant voir plus en détails les divers aspects du procédé selon le mode de réalisation préféré de l'invention.

### 1. Suralimentation

La figure 2 correspond à un schéma d'une structure de régulation de la pression de suralimentation conforme au mode de réalisation préféré de l'invention.

La structure choisie est une régulation en cascade composée de deux régulateurs 200 et 201.

Une première boucle de régulation permet de déterminer un taux de détente dans la turbine du turbocompresseur 20 adapté pour faire converger la pression de suralimentation $P_{sural}$ vers une consigne de pression de suralimentation $P_{sural\_cons}$.

On utilise notamment une mesure Pit du taux de détente, une consigne associée $P_{it\_cons}$ de taux de détente, ainsi qu'une correction $P_{it\_cor}$ de taux de détente dont nous parlerons plus bas.

Une deuxième boucle de régulation permet de commander des ailettes de la turbine du turbocompresseur 20 de manière à régler ledit taux de détente à ladite valeur déterminée par la première boucle de régulation.

A cet effet, la deuxième boucle de régulation utilise une consigne d'ouverture des ailettes notée $RCO_{cons}$ de sorte à générer un signal $RCO_{com}$ de commande des ailettes.

On notera ici que l'ensemble des consignes précitées ainsi que celles qui seront décrites dans ce texte peuvent être déterminées de façon connue en soi par lecture dans une cartographie élaborée par exemple au moment d'une mise au point du moteur.

Dans la mesure où la consigne d'ouverture des ailettes $RCO_{cons}$ ne permet pas toujours d'assurer avec exactitude le taux de détente, on utilise en outre une correction d'ouverture de ces ailettes.

Cette correction dépend d'une erreur entre la consigne de taux de détente $P_{it\_cons}$ et le taux de détente mesurée $P_{it}$.

Comme évoqué précédemment, une correction de ce type est également utilisée dans la première boucle de régulation.

En particulier, la consigne du taux de détente $P_{it\_cons}$ de la turbine ne permettant pas toujours d'assurer précisément la consigne de pression de suralimentation $P_{sural\_cons}$, cette correction, notée $P_{it\_cor}$, est fonction d'une différence entre la consigne de pression de suralimentation $P_{sural\_cons}$ et une pression, notée $P_{adm}$, sélectionnée parmi la mesure de pression de suralimentation $P_{sural}$ et une mesure de la pression dans le collecteur $P_{col}$.

Le choix entre ces deux pressions est automatiquement effectué par le moteur selon l'état de fonctionnement du volet d'admission d'air 60.

En particulier, si le critère d'efficacité prédéterminé est respecté, la pression $P_{adm}$ correspond à la pression mesurée de suralimentation $P_{sural}$.

Inversement, si ce critère n'est pas respecté, la pression $P_{adm}$ correspond à la pression dans le collecteur $P_{col}$.

L'utilisation d'une telle sélection est basée sur un principe selon lequel la pression de suralimentation mesurée $P_{sural}$ et la pression mesurée dans le collecteur $P_{col}$ ne sont pas du tout égales lorsque le volet d'admission 60 est saturé.

Cette inégalité des pressions est due notamment à une dispersion des capteurs.

En tout état de cause, elle engendre désavantageusement une erreur statique sur la régulation.

C'est la raison pour laquelle lorsque le volet n'est pas saturé, la pression $P_{adm}$ en entrée du régulateur 200 est assignée à la pression de suralimentation mesurée $P_{sural}$, et en cas inverse lorsque le volet est saturé, on assigne la pression $P_{col}$ mesurée dans le collecteur à la pression $P_{adm}$.

### 2. Débit d'air et taux de recirculation

### 2.1 Débit d'air

La figure 3 montre un schéma général de la structure de régulation du débit d'air par commande du volet d'admission 60.

Cette structure comporte un modèle 250 du volet d'admission alimenté en entrée par une mesure et une consigne améliorée du débit d'air, notées respectivement $Q_{air\_dyn}$ et $Q_{air\_dyn\_cons}$.

Par ailleurs, le modèle admet en entrée une température de l'air $T_{air}$, la pression mesurée de suralimentation $P_{sural}$, la pression mesurée dans le collecteur $P_{col}$ et la consigne de pression dans le collecteur $P_{col\_cons}$.

Le modèle 250 délivre en sortie une mesure et une consigne qui sont relatives à la section efficace du volet 60 ($S_{eff\_volet}$ et $S_{eff\_volet-cons}$ respectivement).

En effectuant leur différence, on obtient une erreur sur la section efficace de ce volet que l'on injecte en entrée d'un régulateur 300.

Puis, en additionnant la sortie correspondante du régulateur à la consigne de section efficace $S_{eff\_volet\_cons}$ on obtient un signal de commande des volets $S_{eff\_volet\_com}$ permettant d'assurer les consignes de débit d'air frais $Q_{air\_cons}$ et du taux de recirculation $\tau_{EGR\_cons}$ que nous décrirons plus tard.

Finalement, le signal de commande $S_{eff\_volet\_com}$ est converti en pourcentage d'ouverture du volet 60 par un module de conversion 301 approprié.

Concernant maintenant la consigne améliorée du débit d'air $Q_{air\_dyn\_cons}$, celle-ci est déterminée à partir d'une équation de remplissage moteur et d'une conservation de la masse dans le collecteur d'admission, à savoir :

$$Q_{air\_dyn\_cons} = 3600 . \frac{V_{22}}{K_r} . \frac{dQ_{air}}{dt} + Q_{air\_cons}$$

Comme évoqué précédemment, cette consigne améliorée permet une prise en compte de phénomènes physiques qui ont lieu dans le circuit d'admission d'air 75.

Comme on peut le voir d'après ce qui précède, cette consigne améliorée dépend de la consigne de débit d'air $Q_{air\_cons}$ dont nous allons parler maintenant.

Selon l'invention, on adapte la consigne $Q_{air\_cons}$ pour qu'elle dépende d'une pression $P_{1\_adapt}$ sélectionnée dans le groupe suivant : la pression mesurée de suralimentation $P_{sural}$, la consigne de pression de suralimentation $P_{sural\_cons}$, la pression mesurée dans le collecteur $P_{col}$.

En particulier, on peut voir d'après le bloc 270 de la figure 4 que cette sélection dépend notamment d'un mode dans lequel se trouve la régulation de la pression de suralimentation.

En particulier, la sélection a lieu selon que la régulation fonctionne en boucle ouverte (BO) ou en boucle fermée (BF).

Plus précisément, cette sélection peut être effectuée en deux temps.

Dans un premier temps, si le critère d'efficacité est respecté (le volet 60 n'est pas saturé), on retient pour $P_{1\_adapt}$ la pression mesurée de suralimentation $P_{sural}$ plutôt que la pression mesurée dans le collecteur $P_{col}$.

Au contraire, si le critère n'est pas respecté (le volet est saturé), on retient la pression mesurée $P_{col}$ dans le collecteur plutôt que la pression mesurée de suralimentation $P_{sural}$.

Puis, dans un deuxième temps, si la régulation de la pression de suralimentation est effectuée en boucle ouverte, on assigne à la pression $P_{1\_adapt}$ la pression choisie dans le premier temps.

En revanche, si la régulation de la pression de suralimentation est effectuée en boucle fermée, on assigne à la pression $P_{1\_adapt}$ la consigne de pression de suralimentation $P_{sural\_cons}$.

Comme indiqué sur la figure 4, la consigne de débit d'air $Q_{air\_cons}$ est ensuite déterminée dans un bloc 580 à partir de la pression $P_{1\_adapt}$, d'une cartographie du débit d'air $Q_{air\_carto}$, du rendement volumétrique $K_r$ dans les cylindres du moteur et de la température dans le collecteur $T_{col}$.

Plus précisément, la consigne de débit d'air $Q_{air\_cons}$ peut être exprimée de la manière suivante :

$$Q_{air\_cons} = min\left( Q_{air\_carto}, K_r \frac{P_{1\_adapt}}{R.T_{col}} \right)$$

Lors de la régulation, la consigne $Q_{air\_cons}$ va correspondre au terme de gauche dans la parenthèse si le critère est respectée, et inversement au terme de droite si le critère n'est pas respecté.

Comme on peut le voir d'après cette expression, le passage d'un terme à l'autre est continu à l'aide de la fonction «minimum» (min).

Un avantage d'une telle adaptation est que l'on évite des aberrations de calcul de cette consigne lorsque le critère d'efficacité n'est plus respecté.

### 2.2 Taux de recirculation du gaz

Concernant maintenant la structure de régulation du taux de recirculation du gaz d'échappement, celle-ci est basée sur le même principe que celui présenté à la figure 3 pour la régulation des volets d'admission, à ceci près qu'en entrée d'un modèle 251 de la vanne EGR, on fournit la consigne améliorée du débit du gaz recirculé $Q_{EGR\_dyn\_cons}$ à la place de la consigne $Q_{air\_dyn-cons}$, la température du gaz recirculé $T_{EGR}$ à la place de la température $T_{air}$, et une pression avant turbine $P_{avt}$ à la place de la pression de suralimentation $P_{sural}$.

La consigne améliorée de débit de gaz recirculé $Q_{EGR\_dyn\_cons}$ peut être obtenue grâce à l'équation de remplissage du moteur, de conservation de la masse dans le collecteur et grâce à une définition classique du taux de recirculation du gaz :

$$Q_{EGR\_dyn\_cons} = 3600.\frac{V_{col}}{Kr}.\frac{d\tau_{EGR\_cons}}{dt}.\frac{Q_{air\_cons}}{(1-\tau_{EGR\_cons})^2} + \frac{\tau_{EGR\_cons}}{1-\tau_{EGR\_cons}}.Q_{air\_dyn\_cons}$$

Comme on peut le voir d'après cette expression, la consigne améliorée $Q_{EGR\_dyn\_cons}$ dépend notamment de la consigne améliorée $Q_{air\_dyn\_cons}$ décrite plus haut et de la consigne du taux de recirculation du gaz $\tau_{EGR\_cons}$.

A cet égard, la figure 4 illustre également une manière d'adapter selon l'invention cette dernière consigne $\tau_{EGR\_cons}$.

Tel qu'illustré, on peut utiliser une nouvelle fois la pression $P_{1\_adapt}$.

On utilise par ailleurs la consigne du débit d'air $Q_{air\_cons}$, la température dans le collecteur $T_{col}$, le rendement

volumétrique $K_r$ et un taux de recirculation du gaz fourni par une cartographie $\tau_{EGR\_carto}$.

Plus précisément encore, la consigne $\tau_{EGR\_cons}$ peut être adaptée en utilisant les deux formules suivantes :

$$\tau_{EGR\_cons} = \frac{Q_{EGR\_cons}}{Q_{EGR\_cons} + Q_{air\_cons}}$$

$$Q_{EGR\_cons} = \min\left(, Q_{EGR\_carto}, K_r \frac{P_{1\_adapt}}{R.T_{col}} - Q_{air\_cons}\right)$$

De nouveau, l'expression de $Q_{EGR\_cons}$ comprend deux termes déterminant respectivement la consigne lorsque le volet est ou n'est pas saturé (ou en d'autres termes lorsque le critère d'efficacité est respecté ou non).

Plus précisément, si le volet n'est pas saturé la consigne en question est déterminée par lecture dans une cartographie classique (terme de gauche).

Et si le volet est saturé elle est déterminée à partir du terme de droite dans la parenthèse, lequel bien entendu peut être cartographié lui aussi.

A cet égard, on peut constater que dans ce dernier cas la consigne $Q_{EGR\_cons}$, et donc $\tau_{EGR\_cons}$, prend une valeur qui dépend de la consigne du débit d'air $Q_{air\_cons}$.

Ainsi, en dépit d'une telle saturation, la régulation du débit d'air continue à être assurée de manière efficace par un transfert du contrôle de cette grandeur du volet d'admission 60 vers la vanne EGR.

On notera encore, que la fonction « minimum » permet d'assurer la transition continue entre ces deux états de fonctionnement.

Par ailleurs, d'après l'expression de $Q_{EGR\_cons}$, on comprendra que le critère d'efficacité est défini comme étant la valeur du terme de droite dans la parenthèse, c'est-à-dire :

$$K_r \frac{P_{1\_adapt}}{R \cdot T_{col}} - Q_{air\_dyn\_cons}$$

Bien entendu, la présente invention n'est nullement limitée à la forme de réalisation décrite ci-dessus et représentée sur les dessins.

En particulier, le procédé de l'invention convient à d'autres structures de régulation que celles présentées ici.

Il en découle que cette remarque vaut également pour le moteur illustré à la figure 1.

Celui-ci peut être simplifié ou complexifié selon le cas d'espèce.

En outre, on peut utiliser un autre critère d'efficacité.

Par exemple, ce critère peut être déterminé non pas par un calcul, comme ici, mais par comparaison d'une mesure directe du taux de recirculation dans la vanne EGR à une valeur seuil.

De même, on peut utiliser une autre grandeur que le taux de recirculation.

Selon un autre aspect, on peut utiliser un autre actuateur que la vanne EGR pour continuer à réguler le débit d'air frais en cas de saturation du volet.

Plus généralement encore, l'invention n'est pas limitée à la régulation du débit d'air.

En effet, le procédé peut être appliqué à la régulation d'une autre grandeur si l'on constate que l'actuateur associé est amené à fonctionner dans un état considéré comme saturé.

Alors, afin de garantir l'efficacité de la régulation d'une telle grandeur, on choisira, de la manière la plus appropriée possible, un autre actuateur dans le moteur apte à jouer un rôle actif dans la régulation à la place dudit actuateur associé lorsque ce dernier s'avère saturé.

## Revendications

1. Procédé de commande d'un moteur, **caractérisé en ce qu'**on régule une première grandeur autour d'une première consigne ($Q_{air\_cons}$) au moyen d'un premier actuateur (60), et on régule une deuxième grandeur autour d'une deuxième consigne ($\tau_{EGR\_cons}$) au moyen d'un deuxième actuateur (30), les première et deuxième grandeurs, les premier et deuxième actuateurs et les première et deuxième consignes correspondant respectivement à un débit d'admission d'air ($Q_{air}$) dans le moteur, un taux de recirculation d'un gaz d'échappement ($\tau_{EGR}$), un volet d'admission d'air (60), une vanne de recirculation du gaz d'échappement (30), et une consigne de débit d'air ($Q_{air\_cons}$) et de débit du gaz d'échappement recirculé ($Q_{EGR\_cons}$), et **en ce qu'**il comporte les étapes suivantes :

    a) on détermine si le premier actuateur est dans un état de fonctionnement qui permet de réguler la première grandeur selon un critère d'efficacité prédéterminé, et
    b) lorsque ce critère n'est pas respecté, on régule la première grandeur au moyen du deuxième actuateur en adaptant automatiquement la deuxième consigne de sorte qu'elle dépend de la première grandeur,
    c) on adapte la consigne de débit d'air ($Q_{air\_cons}$) et/ou du taux de recirculation du gaz d'échappement ($\tau_{EGR\_cons}$) pour qu'elle dépende d'une pression ($P_{1\_adapt}$) sélectionnée dans le groupe suivant : une pression mesurée de suralimentation ($P_{sural}$), une consigne de pression de suralimentation, une pression mesurée dans un collecteur ($P_{col}$),
    d) l'on régule la pression de suralimentation ($P_{sural}$) du moteur autour de la consigne de pression de suralimentation ($P_{sural\_cons}$) au moyen d'un turbocompresseur (20) et au moyen d'une mesure de pression ($P_{adm}$) sélectionnée de la manière suivante :

        - si le critère est respecté, la pression mesurée de suralimentation ($P_{sural}$),
        - si le critère n'est pas respecté, la pression ($P_{col}$) mesurée dans le collecteur du moteur ;

    e) on élabore des consignes de débit d'air et de taux de recirculation du gaz d'échappement améliorées ($Q_{air\_dyn\_cons}$ ; $\tau_{EGR\_dyn\_cons}$), par rapport auxdites consignes du débit d'air et du taux de recirculation du gaz d'échappement, en prenant en compte un volume du collecteur ;

la consigne adaptée du débit d'air correspondant à une expression du type :

$$Q_{air\_cons} = \min\left( Q_{air\_carto}, K_r \frac{P_{1\_adapt}}{R.T_{col}} \right)$$

**2.** Procédé selon la revendication précédente, **caractérisé en ce que** la deuxième consigne adaptée dépend de la première consigne.

**3.** Procédé selon l'une des revendications précédentes, **caractérisé en ce que** l'on sélectionne dans le groupe la consigne de pression de suralimentation ($P_{sural\_cons}$) si l'on régule le débit d'air en boucle fermée et on sélectionne l'une ($P_{sural}$, $P_{col}$) parmi la pression de suralimentation mesurée et la pression mesurée dans le collecteur si l'on régule le débit d'air en boucle ouverte.

**4.** Procédé selon l'une des revendications précédentes, **caractérisé en ce que** la consigne adaptée du taux de recirculation du gaz ($\tau_{EGR\_cons}$) correspond à une expression du type :

$$\tau_{EGR\_cons} = \frac{Q_{EGR\_cons}}{Q_{EGR\_cons} + Q_{air\_cons}}$$

avec,

$$Q_{EGR\_cons} = \min\left( , Q_{EGR\_carto}, K_r \frac{P_{1\_adapt}}{R.T_{col}} - Q_{air\_cons} \right)$$

où min désigne une fonction de type mimimum et $Q_{EGR\_carto}$, $K_r$, $R$, $T_{col}$ et $Q_{air\_cons}$, désignent une valeur déterminée à partir d'une cartographie du débit de recirculation du gaz, un rendement volumétrique, une constante de gaz, une température dans le collecteur, et la consigne de débit d'air, respectivement.

5. Moteur comportant un premier actuateur pour réguler une première grandeur autour d'une première consigne ($Q_{air\_cons}$) au moyen d'un premier actuateur (60), et un deuxième actuateur (30) pour réguler une deuxième grandeur autour d'une deuxième consigne ($\tau_{EGR\_cons}$), **caractérisé en ce que** les première et deuxième grandeurs, les premier et deuxième actuateurs et les première et deuxième consignes correspondant respectivement à un débit d'admission d'air ($Q_{air}$) dans le moteur, un taux de recirculation d'un gaz d'échappement ($\tau_{EGR}$), un volet d'admission d'air (60), une vanne de recirculation du gaz d'échappement (30), et une consigne de débit d'air ($Q_{air\_cons}$) et de débit du gaz d'échappement recirculé ($Q_{EGR\_cons}$), et **en ce qu'**il comporte en outre des moyens de commande aptes :

- à déterminer si le premier actuateur est dans un état de fonctionnement qui permet de réguler la première grandeur selon un critère d'efficacité prédéterminé, et
- lorsque ce critère n'est pas respecté, à réguler la première grandeur au moyen du deuxième actuateur en adaptant automatiquement la deuxième consigne de sorte qu'elle dépende de la première grandeur,
- à adapter la consigne de débit d'air ($Q_{air\_cons}$) et/ou du taux de recirculation du gaz d'échappement ($\tau_{EGR\_cons}$) pour qu'elle dépende d'une pression ($P1\_adapt$) sélectionnée dans le groupe suivant : une pression mesurée de suralimentation ($P_{sural}$), une consigne de pression de suralimentation, une pression mesurée dans un collecteur ($P_{col}$),
- à réguler la pression de suralimentation ($P_{sural}$) du moteur autour de la consigne de pression de suralimentation ($P_{sural}$ cons) au moyen d'un turbocompresseur (20) et au moyen d'une mesure de pression ($P_{adm}$) sélectionnée de la manière suivante :

  - si le critère est respecté, la pression mesurée de suralimentation ($P_{sural}$).
  - si le critère n'est pas respecté, la pression ($P_{col}$) mesurée dans le collecteur du moteur;
  - à élaborer des consignes de débit d'air et de taux de recirculation du gaz d'échappement améliorées ($Q_{air\ dyn\ cons}$; $\tau_{EGR\ dyn\ cons}$), par rapport auxdites consignes du débit d'air et du taux de recirculation du gaz d'échappement, en prenant en compte un volume du collecteur ;

la consigne adaptée du débit d'air correspondant à une expression du type :

$$Q_{air\_cons} = \min\left(Q_{air\_carto}, K_r \frac{P_{1\_adapt}}{R.T_{col}}\right).$$

**Claims**

1. Method for controlling an engine, **characterized in that** a first quantity is regulated about a first setpoint ($Q_{air\_cons}$) by means of a first actuator (60), and a second quantity is regulated about a second setpoint ($\tau_{EGR\_cons}$) by means of a second actuator (30), the first and second quantities, the first and second actuators and the first and second setpoints respectively corresponding to an air intake flow rate ($Q_{air}$) into the engine, an exhaust gas recirculation rate ($\tau_{EGR}$), an air intake flap (60), an exhaust gas recirculation valve (30) and an air flow rate ($Q_{air\_cons}$) and recirculated exhaust gas flow rate ($Q_{EGR\_cons}$) setpoint, and **in that** it comprises the following steps:

   a) a determination is made as to whether the first actuator is in an operating state which makes it possible to regulate the first quantity according to a predetermined effectiveness criterion, and
   b) when this criterion is not observed, the first quantity is regulated by means of the second actuator by automatically adapting the second setpoint so that it depends on the first quantity,
   c) the air flow rate ($Q_{air\_cons}$) and/or the exhaust gas recirculation rate ($\tau_{EGR\_cons}$) setpoint is adapted so that it depends on a pressure ($P_{1\_adapt}$) selected from the following group: a measured supercharging pressure ($P_{sural}$), a supercharging pressure setpoint, a pressure measured in a manifold ($P_{col}$),
   d) the supercharging pressure ($P_{sural}$) of the engine is regulated about the supercharging pressure setpoint ($P_{sural\_cons}$) by means of a turbocharger (20) and by means of a pressure measurement ($P_{adm}$) selected as follows:

      - if the criterion is observed, the measured supercharging pressure ($P_{sural}$),
      - if the criterion is not observed, the pressure ($P_{col}$) measured in the manifold of the engine;

e) improved air flow rate and exhaust gas recirculation rate setpoints ($Q_{air\_dyn\_cons}$; $\tau_{EGR\_dyn\_cons}$) are generated, said setpoints being improved compared to said air flow rate and exhaust gas recirculation rate setpoints, by taking into account a volume of the manifold;

the adapted air flow rate setpoint corresponding to an expression of the type:

$$Q_{air\_cons} = \min\left( Q_{air\_carto}, K_r \frac{P_{1\_adapt}}{R.T_{col}} \right)$$

2. Method according to the preceding claim, **characterized in that** the second adapted setpoint depends on the first setpoint.

3. Method according to one of the preceding claims, **characterized in that** the supercharging pressure setpoint ($P_{sural\_cons}$) is selected from the group if the air flow rate is regulated in closed loop mode and one ($P_{sural}$, $P_{col}$) out of the measured supercharging pressure and the pressure measured in the manifold is selected if the air flow rate is regulated in open loop mode.

4. Method according to one of the preceding claims, **characterized in that** the adapted gas recirculation rate setpoint ($\tau_{EGR\_cons}$) corresponds to an expression of the type:

$$\tau_{EGR\_cons} = \frac{Q_{EGR\_cons}}{Q_{EGR\_cons} + Q_{air\_cons}}$$

with,

$$Q_{EGR\_cons} = \min\left( , Q_{EGR\_carto}, K_r \frac{P_{1\_adapt}}{R.T_{col}} - Q_{air\_cons} \right)$$

in which min designates a function of minimum type and $Q_{EGR\_carto}$, $K_r$, $R$, $T_{col}$ and $Q_{air\_cons}$ designate a value determined from a mapping of the gas recirculation flow rate, a volumetric efficiency, a gas constant, a temperature in the manifold, and the air flow rate setpoint, respectively.

5. Engine comprising a first actuator for regulating a first quantity about a first setpoint ($Q_{air\_cons}$) by means of a first actuator (60), and a second actuator (30) for regulating a second quantity about a second setpoint ($\tau_{EGR\_cons}$), **characterized in that** the first and second quantities, the first and second actuators and the first and second setpoints respectively correspond to an air intake flow rate ($Q_{air}$) into the engine, an exhaust gas recirculation rate ($\tau_{EGR}$), an air intake flap (60), an exhaust gas recirculation valve (30), and an air flow rate ($Q_{air\_cons}$) and recirculated exhaust gas flow rate ($Q_{EGR\_cons}$) setpoint, and **in that** it also comprises control means capable of:

   - determining whether the first actuator is in an operating state which makes it possible to regulate the first quantity according to a predetermined effectiveness criterion, and
   - when this criterion is not observed, regulating the first quantity by means of the second actuator by automatically adapting the second setpoint so that it depends on the first quantity,
   - adapting the air flow rate ($Q_{air\_cons}$) and/or exhaust gas recirculation rate ($\tau_{EGR\_cons}$) setpoint so that it depends on a pressure (P1_adapt) selected from the following group: a measured supercharging pressure ($P_{sural}$), a supercharging pressure setpoint, a pressure measured in a manifold ($P_{col}$),
   - regulating the supercharging pressure ($P_{sural}$) of the engine about the supercharging pressure setpoint ($P_{sural\_cons}$) by means of a turbocharger (20) and by means of a pressure measurement ($P_{adm}$) selected as follows:

- if the criterion is observed, the measured supercharging pressure ($P_{sural}$),
- if the criterion is not observed, the pressure ($P_{col}$) measured in the manifold of the engine;

- generating improved air flow rate and exhaust gas recirculation rate setpoints ($Q_{air\_dyn\_cons}$; $\tau_{EGR\_dyn\_cons}$), said setpoints being improved relative to said air flow rate and exhaust gas recirculation rate setpoints by taking into account a volume of the manifold;

the adapted air flow rate setpoint corresponding to an expression of the type:

$$Q_{air\_cons} = \min\left(Q_{air\_carto}, K_r \frac{P_{1\_adapt}}{R.T_{col}}\right)$$

## Patentansprüche

1. Verfahren zur Steuerung eines Motors, **dadurch gekennzeichnet, dass** eine erste Größe um einen ersten Sollwert ($Q_{air\_cons}$) herum mittels eines ersten Schaltventils (60) geregelt wird, und dass eine zweite Größe um einen zweiten Sollwert ($\tau_{EGR\_cons}$) herum mittels eines zweiten Schaltventils (30) geregelt wird, wobei die erste und die zweite Größe, das erste und das zweite Schaltventil und der erste und der zweite Sollwert einem Luftansaugdurchsatz ($Q_{air}$) im Motor, einem Rückführungsgrad eines Abgases ($\tau_{EGR}$), einem Luft-Saugventil (60), einem Rückführventil des Abgases (30) bzw. einem Sollwert des Luftdurchsatzes ($Q_{air\_cons}$) und des rückgeführten Abgasdurchsatzes ($Q_{EGR\_cons}$) entsprechen, und dass es die folgenden Schritte aufweist:

   a) es wird festgelegt, ob das erste Schaltventil in einem Betriebszustand ist, der es ermöglicht, die erste Größe gemäß einem vorbestimmten Wirksamkeitskriterium zu regeln, und
   b) wenn dieses Kriterium nicht eingehalten wird, wird die erste Größe mittels des zweiten Schaltventils geregelt, indem automatisch der zweite Sollwert so angepasst wird, dass er von der ersten Größe abhängt,
   c) der Sollwert des Luftdurchsatzes ($Q_{air\_cons}$) und/oder des Rückführungsgrads des Abgases ($\tau_{EGR\_cons}$) wird so angepasst, dass er von einem Druck ($P_{1\_adapt}$) abhängt, der aus der folgenden Gruppe ausgewählt wird: ein gemessener Ladedruck ($P_{sural}$), ein Ladedruck-Sollwert, ein in einem Kollektor gemessener Druck ($P_{col}$),
   d) der Ladedruck ($P_{sural}$) des Motors wird um den Ladedruck-Sollwert ($P_{sural\_cons}$) herum mittels eines Turbokompressors (20) und mittels eines Druckmeßwerts ($P_{adm}$) geregelt, der folgendermaßen ausgewählt wird:

      - wenn das Kriterium eingehalten wird, der gemessene Ladedruck ($P_{sural}$),
      - wenn das Kriterium nicht eingehalten wird, der im Kollektor des Motors gemessene Druck ($P_{col}$);

   e) es werden verbesserte Sollwerte des Luftdurchsatzes und des Rückführungsgrads des Abgases ($Q_{air\_dyn\_cons}$; $\tau_{EGR\_dyn\_cons}$) bezüglich der Sollwerte des Luftdurchsatzes und des Rückführungsgrads des Abgases erarbeitet, indem ein Volumen des Kollektors berücksichtigt wird;

   wobei der angepasste Sollwert des Luftdurchsatzes einem Ausdruck des folgenden Typs entspricht:

$$Q_{air\_cons} = \min\left(Q_{air\_carto}, K_r \frac{P_{1\_adapt}}{R.T_{col}}\right)$$

2. Verfahren nach dem vorhergehenden Anspruch, **dadurch gekennzeichnet, dass** der zweite angepasste Sollwert vom ersten Sollwert abhängt.

**3.** Verfahren nach einem der vorhergehenden Ansprüche, **dadurch gekennzeichnet, dass** der Ladedruck-Sollwert ($P_{sural\_cons}$) aus der Gruppe ausgewählt wird, wenn der Luftdurchsatz in geschlossener Schleife geregelt wird, und einer von dem gemessenen Ladedruck und dem im Kollektor gemessenen Druck ($P_{sural}$, $P_{col}$) ausgewählt wird, wenn der Luftdurchsatz in offener Schleife geregelt wird.

**4.** Verfahren nach einem der vorhergehenden Ansprüche, **dadurch gekennzeichnet, dass** der angepasste Sollwert des Rückführungsgrads des Gases ($\tau_{EGR\_cons}$) einem Ausdruck der folgenden Art entspricht:

$$\tau_{EGR\_cons} = \frac{Q_{EGR\_cons}}{Q_{EGR\_cons} + Q_{air\_cons}}$$

mit,

$$Q_{EGR\_cons} = \min\left(, Q_{EGR\_carto}, K_r \frac{P_{1\_adapt}}{R.T_{col}} - Q_{air\_cons}\right)$$

wobei min eine Funktion des Typs Minimum bezeichnet und $Q_{EGR\_carto}$, $K_r$, $R$, $T_{col}$ und $Q_{air\_cons}$ einen ausgehend von einem Kennfeld des Rückführungsdurchsatzes des Gases, einem volumetrischen Wirkungsgrad, einer Gaskonstante, einer Temperatur im Kollektor, bzw. dem Luftdurchsatz-Sollwert bestimmten Wert bezeichnen.

**5.** Motor, der ein erstes Schaltventil zur Regelung einer ersten Größe um einen ersten Sollwert ($Q_{air\_cons}$) herum mittels eines ersten Schaltventils (60) und ein zweites Schaltventil (30) zur Regelung einer zweiten Größe um einen zweiten Sollwert ($\tau_{EGR\_cons}$) herum aufweist, **dadurch gekennzeichnet, dass** die erste und die zweite Größe, das erste und das zweite Schaltventil und der erste und der zweite Sollwert einem Luftansaugdurchsatz ($Q_{air}$) im Motor, einem Rückführungsgrad eines Abgases ($\tau_{EGR}$), einem Luft-Saugventil (60), einem Rückführungsventil des Abgases (30), bzw. einem Sollwert des Luftdurchsatzes ($Q_{air\_cons}$) und des rückgeführten Abgasdurchsatzes ($Q_{EGR\_cons}$) entsprechen, und dass er außerdem Steuereinrichtungen aufweist, die fähig sind:

- zu bestimmen, ob das erste Schaltventil in einem Betriebszustand ist, der es ermöglicht, die erste Größe gemäß einem vorbestimmten Wirksamkeitskriterium zu regeln, und
- wenn dieses Kriterium nicht eingehalten wird, die erste Größe mittels des zweiten Schaltventils zu regeln, indem automatisch der zweite Sollwert so angepasst wird, dass er von der ersten Größe abhängt,
- den Luftdurchsatz-Sollwert ($Q_{air\_cons}$) und/oder den Sollwert des Rückführungsgrads des Abgases ($\tau_{EGR\_cons}$) so anzupassen, dass er von einem Druck ($P_{1\_adapt}$) abhängt, der aus der folgenden Gruppe ausgewählt wir d: ein gemessener Ladedruck ($P_{sural}$), ein Sollwert des Ladedrucks, ein in einem Kollektor gemessener Druck ($P_{col}$,
- den Ladedruck ($P_{sural}$) des Motors um den Ladedruck-Sollwert ($P_{sural\_cons}$) herum mittels eines Turbokompressors (20) und mittels eines Druckmeßwerts ($P_{adm}$) zu regeln, der folgendermaßen ausgewählt wird:

  - wenn das Kriterium eingehalten wird, der gemessene Ladedruck ($P_{sural}$),
  - wenn das Kriterium nicht eingehalten wird, der im Kollektor des Motors gemessene Druck ($P_{col}$);

- verbesserte Sollwerte des Luftdurchsatzes und des Rückführungsgrads des Abgases ($Q_{air\_dyn\_cons}$; $\tau_{EGR\_dyn\_cons}$) bezüglich der Sollwerte des Luftdurchsatzes und des Rückführungsgrads des Abgases zu erarbeiten, indem ein Volumen des Kollektors berücksichtigt wird;

wobei der entsprechende angepasste Sollwert des Luftdurchsatzes einen Ausdruck des folgenden Typs hat:

$$Q_{air\_c} = \min\left(Q_{air\_carto}, K_r \frac{P_{1\_adapt}}{R.T_{col}}\right)$$

FIG.1

FIG.2

$Q_{air\_dyn\_cons}$

$T_{air}$

$P_{sural}$

$P_{col\_cons}$

— 250

$S_{eff\_volet\_cons}$

+ −

300

+ +

$S_{eff\_volet\_com}$

301

%volet

$S_{eff} \rightarrow \%$

$Q_{air\_dyn}$

$T_{air}$

$P_{sural}$

$P_{col}$

— 250

$S_{eff\_volet}$

**FIG.3**

$Q_{air\_cons}$

580

$Q_{air\_carto}$

$K_r$

$T_{col}$

$P_{1\_adapt}$

$\tau_{EGR\_carto}$

$K_r$

$T_{col}$

$Q_{air\_cons}$

$P_{1\_adapt}$

$\tau_{EGR\_cons}$

600

$BO/BF_{sural}$

$P_{sural\_cons}$

+ −

|X|

270

$P_{sural}$

$P_{col}$

**FIG.4**

**EP 1 954 933 B1**